# EUROPÄISCHE PATENTSCHRIFT

(11) **EP 3 339 873 B1**
(45) Veröffentlichungstag und Bekanntmachung des Hinweises auf die Patenterteilung: **16.09.2020**
(21) Anmeldenummer: 17195947.1
(22) Anmeldetag: 11.10.2017
(51) Int. Cl.: G01S 1/68, H05B 47/19

(54) **BETREIBEN VON EINER SENDEEINRICHTUNG EINER EINE LEUCHTEINRICHTUNG AUFWEISENDEN BELEUCHTUNGSEINRICHTUNG**
OPERATION OF A TRANSMISSION DEVICE OF A LIGHTING DEVICE HAVING A LIGHT ASSEMBLY
FONCTIONNEMENT D'UN DISPOSITIF D'ÉMISSION D'UNE INSTALLATION D'ÉCLAIRAGE COMPORTANT UN DISPOSITIF D'ÉCLAIRAGE

(30) Priorität: 23.12.2016 DE 102016125636
(43) Veröffentlichungstag der Anmeldung: 27.06.2018
(73) Patentinhaber: OSRAM GmbH, 80807 München (DE)
(72) Erfinder: FEIL, Henry, 82008 Unterhaching (DE); PEITZ, Christoph, 59556 Lippstadt (DE); STUTZ, Michel, 81541 München (DE); WALLWITZ, Karl-Heinz, 13355 Berlin (DE); WALLWITZ, Andrej, 80689 München (DE)
(74) Vertreter: Hofstetter, Schurack & Partner

(56) Entgegenhaltungen:
- WO-A1-2016/060696
- WO-A1-2016/073215

## Beschreibung

Die Erfindung betrifft ein Verfahren zum Betreiben von einer Sendeeinrichtung einer eine Leuchteinrichtung aufweisenden Beleuchtungseinrichtung, wobei die Sendeeinrichtung in oder unmittelbar an der Leuchteinrichtung angeordnet ist und ein Funksignal mit für die Sendeeinrichtung spezifischen Identifikationsdaten drahtlos aussendet. Die Erfindung betrifft ferner eine Beleuchtungseinrichtung mit einer Sendeeinrichtung und einer Leuchteinrichtung, wobei die Sendeeinrichtung in oder unmittelbar an der Leuchteinrichtung angeordnet ist und ausgebildet ist, ein Funksignal mit für die Sendeeinrichtung spezifischen Identifikationsdaten drahtlos auszusenden.

Beleuchtungssysteme, Beleuchtungseinrichtungen sowie auch Leuchteinrichtungen und Sendeeinrichtungen der gattungsgemäßen Art sind dem Grunde nach im Stand der Technik umfänglich bekannt, sodass es eines gesonderten druckschriftlichen Nachweises hierfür nicht bedarf. Mit Beleuchtungssystemen werden Räume, beispielsweise außerhalb oder auch innerhalb von Gebäuden, in vorgebbarer Weise ausgeleuchtet, um eine bestimmungsgemäße Nutzung zu ermöglichen oder zu unterstützen. Für die Beleuchtungssysteme werden zunehmend Beleuchtungseinrichtungen eingesetzt, die neben einer Leuchteinrichtung, die in vorgebbarer Weise Licht abgibt, auch eine Sendeeinrichtung aufweisen, die zumindest dazu ausgebildet ist, spezifische Identifikationsdaten drahtlos auszusenden, beispielsweise nach Art von Rundfunk. Vorzugsweise ist diese Sendeeinrichtung dazu ausgebildet, das Funksignal nach Art von Nahfunk auszusenden. Eine derartige Sendeeinrichtung wird im Stand der Technik auch als "Beacon" bezeichnet.

Sogenannte Beacons können mit Leuchteinrichtungen kombiniert werden, um leuchtenspezifische oder auch andere Informationen mittels ihres Funksignals bereitzustellen. Die Beacon-Technologie basiert auf einem Sendersystem beziehungsweise auf einem Sender-Empfänger-System. Ein Beacon (zu Deutsch auch Leuchtfeuer, Bake, Peilsender oder dergleichen) ist ein kleiner, meist batteriebetriebener Sender, der ein Funksignal, vorzugsweise in definierbaren Zeitintervallen, aussendet, beispielsweise basierend auf einem Bluetooth-Low-Energy-Standard (BLE). Das Funksignal eines Beacon zeichnet sich durch die Identifikationsdaten aus, die beispielsweise eine einmalige Identifikationsnummer, englisch zum Beispiel universally unic identifier (UUID) genannt, umfasst. Beacons können dazu verwendet werden, Objekten und/oder Orten eine, insbesondere digitale, Identifikation zuzuordnen. Objekten, an denen ein Beacon installiert ist, sowie auch Orte, an denen ein Beacon, zum Beispiel an einer Wand oder einer Decke, installiert ist, können auf diese Weise von Kommunikationsendgeräten, beispielsweise Smartphones, Laptops und/oder dergleichen, im Signalfeld des Beacon identifiziert werden.

Mit Hilfe eines Beacon kann dadurch zum Beispiel ein Ort identifiziert werden beziehungsweise eine Ortung durchgeführt werden. Durch Anordnung von einem oder mehreren Beacons in einem vorgegebenen Bereich, beispielsweise einem Gebäudebereich oder dergleichen, kann eine Art funkbasiertes Raster bereitgestellt werden, dass es einem sich in dem Bereich befindlichen Kommunikationsendgerät mittels seiner Funkschnittstelle, insbesondere BLE-Schnittstelle, sowie entsprechenden Auswertemöglichkeiten erlaubt, eine eigene Position zu ermitteln. Die individuellen Identifikationsdaten der installierten Beacons geben einem Ort dabei eine Kennung, anhand der das Kommunikationsendgerät, zumindest näherungsweise, die Position ermitteln kann. Grundsätzlich kann jedenfalls ein Sendebereich eines jeweiligen Beacon ermittelt werden. Durch geeignete Auswertung, beispielsweise unter Nutzung vorgegebener Algorithmen oder dergleichen, kann die Genauigkeit der ermittelten Position, beispielsweise unter Auswerten einer Signalstärke und/oder dergleichen, verbessert werden. Vorzugsweise kann das Kommunikationsendgerät hierfür auf Daten eines Datenspeichers zugreifen, zum Beispiel über ein Kommunikationsnetzwerk wie dem Internet, einem Mobilfunknetzwerk und/oder dergleichen. Der Datenspeicher kann beispielsweise ein Cloud-Server oder dergleichen sein. Hier können zum Beispiel die Identifikationsdaten und zugeordnete Positionsdaten in einer Karte vermerkt sein.

Kommt das Kommunikationsendgerät in die Reichweite der Sendeeinrichtung beziehungsweise des Beacon, kann es anhand der ermittelten Identifikationsdaten somit beispielsweise über eine Serverabfrage den eigenen Standort ermitteln. Unter Nutzung weiterer Funksignale von weiteren Sendeeinrichtungen beziehungsweise Beacons kann mittels Ortungsalgorithmen die Genauigkeit verbessert werden, insbesondere kann aus einer Empfangsfeldstärke des jeweiligen Funksignals der Sendeeinrichtung beziehungsweise des Beacons ein Abstand zu der jeweiligen Sendeeinrichtung beziehungsweise zum jeweiligen Beacon ermittelt werden.

Grundsätzlich können in der Lichttechnik bei Beleuchtungssystemen der gattungsgemäßen Art beziehungsweise deren Beleuchtungseinrichtungen Sendeeinrichtungen beziehungsweise Beacons installiert werden. Dabei wird insbesondere der Vorteil genutzt, dass eine Lichtinstallation einen permanenten Energiezugang bereitstellt, um die Sendeeinrichtung beziehungsweise den Beacon mit elektrischer Energie zu versorgen. Daraus ergibt sich ein Vorteil, nämlich dass die Sendeeinrichtung beziehungsweise der Beacon keine eigene Energieversorgung in Form einer Batterie benötigt und somit entsprechender Wartungsaufwand eingespart werden kann. Darüber hinaus erlaubt es diese Ausgestaltung, dass auch Einstellungen der Sendeeinrichtung beziehungsweise des Beacon gewählt werden können, die einen hohen Energieverbrauch zur Folge haben, ohne dass dies Auswirkungen auf eine Lebensdauer des Beacon zu haben braucht. Darüber hinaus können Installationsprozesse von derartigen Sendeeinrichtungen beziehungsweise Beacons und der Lichttechnik vereinheitlicht werden. Ein weiterer Vorteil ist eine definierte Arretierungsposition der Sendeeinrichtung beziehungsweise des Beacon, die vorzugsweise derart gewählt ist, dass die Sendeeinrichtung beziehungsweise der Beacon vor Manipulation geschützt ist. Dadurch kann einem Ort somit eine zuverlässig sichere Kennung zugeordnet werden.

Einen Überblick über Nutzungspotenziale der Integration einer Sendeeinrichtung beziehungsweise eines Beacon in eine Beleuchtungseinrichtung ergibt sich aus folgender, nicht abschließender Aufzählung:
- Es kann die Energieversorgung der Lichtinstallation anstelle einer Energieversorgung durch eine Batterie genutzt werden, um zum Beispiel Lebenszykluskosten der Sendeeinrichtung beziehungsweise des Beacon zu reduzieren.
- Die elektrische Energieversorgung des Beleuchtungssystems beziehungsweise der Beleuchtungseinrichtung kann genutzt werden, um Sendeparameter des Signals der Sendeeinrichtung beziehungsweise des Beacon an einen Dienst und nicht an eine verfügbare Restenergiemenge beziehungsweise Parameter der Batterie anzupassen. Beispielsweise erzeugen häufige Sendezyklen eine hohe Genauigkeit eines jeweiligen Dienstes, jedoch kann dies auch zu einem erhöhten Energieverbrauch führen.
- Der Austausch der Batterie konventioneller Sendeeinrichtungen beziehungsweise Beacons birgt Risiken, beispielsweise im Hinblick auf Fehler bei der Handhabung.
- Eine Nicht-Verfügbarkeit von Diensten kann durch eine unterbrechungsfreie Energieversorgung der Sendeeinrichtung beziehungsweise des Beacon vermieden werden.
- Ein Installationsort unterhalb einer Decke kann vorteilhaft für eine Signalausbreitung des Signals der Sendeeinrichtung beziehungsweise des Beacon sein.
- Ein Installationsort unterhalb der Decke kann das Gesamtsystem robuster gegen Störungen beziehungsweise Abschattungen durch andere Objekte auf Höhe einer Flurebene im Gegensatz zu einer Installation der Sendeeinrichtung beziehungsweise des Beacon selbst auf Höhe der Flurebene machen.
- Die Sendeeinrichtung beziehungsweise der Beacon kann vor Manipulationen beziehungsweise Fremdzugriffen - ob versehentlich oder mutwillig - geschützt werden.
- Das Beleuchtungssystem sowie auch Dienste, wie zum Beispiel Ortungsdienste oder dergleichen, können als Gesamtsystem "aus einer Hand" angeboten werden.
- Es besteht darüber hinaus die Möglichkeit einer Nutzung eines sicheren Kommunikationsnetzwerkes des Beleuchtungssystems, um beispielsweise die Sendeeinrichtung beziehungsweise den Beacon zu konfigurieren oder die Sendeeinrichtungen beziehungsweise die Beacons untereinander zu vernetzen.
- Eine Vereinheitlichung von Installationsprozessen von Sendeeinrichtungen beziehungsweise Beacons und dem Beleuchtungssystem kann ermöglicht werden.
- Weiterhin besteht die Möglichkeit des Koppelns mit weiteren Systemelementen einer peripheren Gebäudeinfrastruktur über das Kommunikationsnetzwerk des Beleuchtungssystems, zum Beispiel mit Elementen der Sicherheitstechnik und/oder dergleichen.
- Es kann ein optisch ansprechendes Beleuchtungssystem bereitgestellt werden, da die Sendeeinrichtung beziehungsweise der Beacon nicht sichtbar in der jeweiligen Beleuchtungseinrichtung beziehungsweise im Beleuchtungssystem angeordnet sein kann.

Ein Beacon kann als Sendeeinrichtung in eine Beleuchtungseinrichtung eines Beleuchtungssystems integriert sein. Das Beleuchtungssystem kann eine Mehrzahl von Beleuchtungseinrichtungen umfassen. Die Beleuchtungseinrichtung umfasst neben dem Beacon die Leuchteinrichtung, die mittels einem oder mehrerer Leuchtmittel die gewünschte Beleuchtungsfunktion bereitstellt. Der Beacon und die Leuchteinrichtung stehen in Kommunikationsverbindung miteinander. Der Beacon ist vorzugsweise in die Leuchteinrichtung integriert angeordnet, insbesondere in einem gemeinsamen Gehäuse. Es braucht also für den Beacon kein separates Gehäuse vorgesehen zu werden. Dadurch kann der Beacon zugleich geschützt angeordnet werden, so dass die bestimmungsgemäße Funktion mit hoher Zuverlässigkeit bereitgestellt werden kann. Weitere Beleuchtungseinrichtungen des Beleuchtungssystems können vorzugsweise identisch zur Beleuchtungseinrichtung ausgebildet sein. Darüber hinaus können natürlich auch insbesondere hinsichtlich ihrer Leuchteinrichtungen unterschiedliche Beleuchtungseinrichtungen vorgesehen sein. Hierbei können die Sendeeinrichtungen beziehungsweise Beacons jedoch gleich ausgebildet sein.

Der Beacon ist ausgebildet, ein Funksignal mit den für den Beacon spezifischen Identifikationsdaten drahtlos auszusenden. Vorzugsweise erfolgt die Aussendung per Funk unter Nutzung eines BLE-Standards. Der Beacon umfasst vorzugsweise ferner eine Steuereinheit, die eine Rechnereinheit sowie eine Speichereinheit umfasst. In der Speichereinheit ist ein ablauffähiges Rechnerprogramm gespeichert, welches für die Rechnereinheit bereitsteht, so dass mittels der Rechnereinheit eine vorgegebene Steuerfunktion realisiert werden kann.

Der Beacon kann ferner mit weiteren lokalen Beacons in Kommunikationsverbindung stehen. Die Kommunikationsverbindung kann ebenfalls als drahtlose Kommunikationsverbindung nach dem BLE-Standard ausgebildet sein. Es kann aber auch eine leitungsgebundene Kommunikationsverbindung vorgesehen sein. Die Kommunikationsverbindung zwischen dem Beacon und den weiteren Beacons ist vorzugsweise bidirektional, um Signale, insbesondere Daten, austauschen zu können.

Darüber hinaus kann der Beacon über eine weitere Kommunikationsverbindung an eine Dateninfrastruktureinrichtung angeschlossen sein. Die Dateninfrastruktureinrichtung kann der Steuerung des Beleuchtungssystems, hier insbesondere der Beleuchtungseinrichtungen des Beleuchtungssystems, dienen. Die Infrastruktureinrichtung kann zum Beispiel das Internet oder aber auch einen zentralen Diensteserver umfassen. Die Dateninfrastruktureinrichtung kann ferner zur Steuerung und/oder Übermittlung von Daten dienen. Der lokale Beacon der Beleuchtungseinrichtung kann als reine Sendeeinrichtung zum Aussenden von Funksignalen nach Art eines Rundfunkbetriebs oder auch als kombinierte Sende-Empfangs-Einrichtung ausgebildet sein, die neben dem Aussenden von Funksignalen nach Art eines Rundfunkbetriebs auch einen Empfang von Funksignalen ermöglicht oder sogar eine bidirektionale Kommunikation mit einem Kommunikationsendgerät ermöglicht.

Das Funksignal des Beacon kann mittels Kommunikationsendgeräten, wie zum Beispiel einem Smartphone, einem LAPTOP und/oder dergleichen, empfangen werden.

Gemäß einem Nutzungsbeispiel können Nutzer beziehungsweise Geräte gegebenenfalls die Herausforderung haben, sich innerhalb eines Bereichs orientieren zu müssen, zu navigieren oder andere lokale digitale Dienste aufzufinden beziehungsweise nutzen zu wollen, wie zum Beispiel Apps, App-Funktionen, Google-Maps, Lightify, eine Lichtsteuerung und/oder dergleichen. Das Beleuchtungssystem mit integrierten Beacons in einem vorgegebenen Bereich kann für diese Nutzungspotenziale zu einem Ortungs- beziehungsweise Orientierungssystem werden. Mit einer damit realisierbaren Selbstortung des Kommunikationsendgerätes können nun Dienste bereitgestellt werden, beispielsweise eine Navigation, eine Bereitstellung von ortsspezifischen Informationen, Diensten und/oder dergleichen.

Ein Aspekt der Beacon-Technologie ist die Möglichkeit zur Konfiguration typischer Parameter, wie beispielsweise eine Signalstärke, ein Sendeintervall und/oder dergleichen des Beacon. Mit unterschiedlichen Konfigurationen können verschiedene Anwendungsszenarien individuell unterstützt werden. Wenn zum Beispiel eine hohe Servicequalität in Bezug auf eine genaue Lokalisierung in kurzen Abständen gewünscht ist, beispielsweise bei einer Indoor-Navigation, können zum Beispiel sehr kurze Sendeintervalle zu konfigurieren sein.

Insbesondere bei digital gesteuerten Beleuchtungssystemen, zum Beispiel unter Nutzung von Digital Addressable Lighting Interfaces (DALI), sollte eindeutig identifiziert werden können, welches Leuchtmittel beziehungsweise welche Leuchteinrichtung an welchem Ort angeordnet ist, um mittels digitaler Lichtsteuerung eine exakte Ansteuerung der Leuchteinrichtungen beziehungsweise deren Leuchtmittel in einem bestimmten Bereich zu ermöglichen. Die Beleuchtungseinrichtungen beziehungsweise die Leuchteinrichtungen benötigen hierzu eine eindeutige Adresse, welche ihre Position in einem vorgegebenen Bereich wiederspiegelt. Der Fachmann nennt eine derartige Zuordnung von Beleuchtungseinrichtungen beziehungsweise Leuchteinrichtungen zu entsprechenden Positionen beziehungsweise Adressen auch "kommissionieren". Hierbei sollten vorzugsweise mehrere Informationen zusammengeführt werden, nämlich eine eindeutige Identifikationsinformation einer jeweiligen Beleuchtungseinrichtung beziehungsweise Leuchteinrichtung, vorzugsweise nach Art von eindeutigen spezifischen Identifikationsdaten, ein Installationsort der jeweiligen Beleuchtungseinrichtung beziehungsweise Leuchteinrichtung in einem vorgegebenen Bereich, das heißt, eine physikalische Adresse der Beleuchtungseinrichtung beziehungsweise der Leuchteinrichtung, sowie eine Kennung der Beleuchtungseinrichtung beziehungsweise Leuchteinrichtung, das heißt, zum Beispiel ihre digitale Adresse.

Die digitale Adresse einer Beleuchtungseinrichtung beziehungsweise Leuchteinrichtung kann zum Beispiel über eine Powerline-Kommunikation oder eine ähnliche leistungsbasierte Kommunikationslösung über die Energieverteilung an eine Steuerung beziehungsweise Datenverarbeitung übermittelt werden. Die Leuchteinrichtung beziehungsweise ein Vorschaltgerät der Leuchteinrichtung kann sich somit mit der digitalen Adresse bei der Steuerung anmelden. Damit ist jedoch noch nicht die Information verfügbar, an welcher physikalischen Stelle im vorgegebenen Bereich die Leuchteinrichtung tatsächlich angeordnet ist. Diese Information ist aber erforderlich, wenn nur ein definierter Bereich beleuchtet werden soll, beispielsweise nur ein Besprechungsraum oder ein Teil davon oder dergleichen.

Derzeit können Beleuchtungssysteme beziehungsweise Leuchtmittel und gleichzeitig deren Standort in der Regel nicht ohne weiteres elektronisch identifiziert werden. Typischerweise kann nur über einen Aufkleber oder eine Aufprägung erkannt werden, beispielsweise auf einem Gehäuse der Beleuchtungseinrichtung beziehungsweise Leuchteinrichtung, um was für einen Typ der Beleuchtungseinrichtung beziehungsweise Leuchteinrichtung beziehungsweise des Leuchtmittels es sich handelt. Eine andere aufwendige Möglichkeit ist es, jede digital angemeldete Leuchteinrichtung im Rahmen des Beleuchtungssystems einzeln blinken zu lassen und manuell eine Positionsinformation in einem Layout zu markieren.

Um Leuchteinrichtungen und/oder Leuchtmittel im Rahmen des Beleuchtungssystems effizient mit einem Lichtmanagementsystem (LMS) zu verbinden, wäre es vorteilhaft, eine oder mehrere elektronische beziehungsweise digitale Identifikationsnummern zur Erkennung des Gesamtsystems oder einzelner Komponenten des Gesamtsystems zur Verfügung zu haben.

Eine spezifische Problematik besteht ferner darin, dass in der Regel in einem Installationsplan Positionen der Leuchteinrichtungen beziehungsweise Leuchtmittel für einen Beleuchtungsbereich beziehungsweise einen Service-Bereich festgelegt werden. Dies gibt einem Installateur vor, welcher der angelieferten beziehungsweise kommissionierten Beleuchtungseinrichtungen beziehungsweise Leuchteinrichtungen, zum Beispiel bezüglich eines Leuchtentyps oder dergleichen, an welcher Position des Bereichs, beispielsweise des Gebäudes, entsprechend dem Installationsplan angeordnet werden sollen.

Ortsbezogene Dienste beziehungsweise Services, wie zum Beispiel Navigation eines Nutzers oder dergleichen, mittels Beacon sollten dem Nutzer in einem vorgegebenen Bereich vorzugsweise permanent und ohne Einschränkung zur Verfügung stehen. Dies erfordert neben einer unterbrechungsfreien elektrischen Energieversorgung auch eine regelmäßige Wartung beziehungsweise gegebenenfalls auch Aktualisierung von Rechnerprogrammen wie zum Beispiel der Firmware oder dergleichen.

Dienste unter Nutzung eines Beacon, wie zum Beispiel eine Navigation mittels eines Kommunikationsendgerätes, sollten den Nutzern vorzugsweise permanent und möglichst ohne Einschränkung zur Verfügung stehen. Dies erfordert unter anderem eine unterbrechungsfreie Energieversorgung für die Beacon. Gleichwohl hat sich als Hindernis herausgestellt, dass Kommunikationsendgeräte in der Regel für ein vorgegebenes, insbesondere proprietäres, Kommunikationsprotokoll ausgebildet sind. Die Kommunikationsprotokolle, die mittlerweile im Einsatz sind, basieren in aller Regel auf dem BLE-Standard als Funk-Standard. Abhängig vom jeweiligen kommunikationsendgerätespezifischen Kommunikationsprotokoll reagieren die Kommunikationsendgeräte teilweise recht unterschiedlich. Ein dabei etabliertes Beacon-Protokoll ist zum Beispiel das "iBeacon"-Protokoll® der Firma Apple Inc. Kommunikationsendgeräte basierend auf dem Betriebssystem iOS® der Firma Apple Inc. können beispielsweise ein Funksignal gemäß dem iBeacon-Protokoll® empfangen und verarbeiten. Darüber hinaus sind weitere derartige Beacon-Protokolle bekannt, so beispielsweise "Eddiestone"® der Firma Google oder das Beacon-Protokoll "AltBeacon", welches ein Open-Source-Protokoll ist. Um eine möglichst breite Anwendung der Beacon-Technologie ermöglichen zu können, kann es somit notwendig sein, mehrere Beacon-Protokolle parallel einzusetzen. Dies erhöht die Problematik für die Herstellung von Beacons, insbesondere mit Blick auf deren Energieversorgung sowie der etwaigen zuverlässigen Bereitstellung eines jeweiligen Dienstes und dergleichen. Natürlich besteht die Möglichkeit, für jedes Beacon-Protokoll einen eigenen, angepassten Beacon bereitzustellen. Dies erweist sich jedoch als aufwändig, insbesondere in Bezug auf die Energieversorgung und/oder konstruktive Aspekte, die die räumliche Anordnung des Beacon betreffen. Darüber hinaus wäre die Anzahl der spezifischen Identifikationsdaten entsprechend erhöht.

Möchte zum Beispiel ein Betreiber eines Supermarkts sicherstellen, dass die angebotenen Dienste, wie beispielsweise eine Navigation eines Kunden durch den Supermarkt oder dergleichen, für jeden Kunden mit einem beliebigen Kommunikationsendgerät uneingeschränkt zur Verfügung steht, wären entsprechend der möglichen herstellerspezifischen beziehungsweise betriebssystemspezifischen Kommunikationsendgeräte angepasste Beacon zu installieren. Dies führt jedoch dazu, dass beispielsweise bei zwei Beacon-Protokollen mindestens doppelt so viele Beacons installiert werden müssten. Dadurch ergeben sich hohe Investitionskosten, hohe Lebenszykluskosten aufgrund eines jeweiligen Batteriewechsels, ein hoher Installationsaufwand sowie auch ein hoher Einrichtungsaufwand zur Festlegung eines jeweiligen Beacon-Protokolls und dergleichen. Darüber hinaus können sich auch Probleme bei der Signalverarbeitung durch die Kommunikationsendgeräte ergeben, wenn die unterschiedlichen Beacons beispielsweise nicht mit Blick auf einen Sendezeitpunkt und eine Funksignalstärke aufeinander abgestimmt sind oder dergleichen.

Hierzu offenbart die WO 2016/060696 A1 ein Verschachteln von multiplen BlueTooth-Low-Energy-Anwendungen. Ferner offenbart die WO 2016/073215 A1 ein System und ein Verfahren zum beleuchtungsgestützten Innenraumpositionieren und Mitteilen.

Es ist deshalb die Aufgabe der Erfindung, eine Funktionalität der Sendeeinrichtung der Beleuchtungseinrichtung zu verbessern.

Als Lösung werden mit der Erfindung ein Verfahren sowie eine Beleuchtungseinrichtung gemäß den unabhängigen Ansprüchen vorgeschlagen.

Weitere vorteilhafte Ausgestaltungen ergeben sich anhand von Merkmalen der abhängigen Ansprüche.

Bezüglich eines gattungsgemäßen Verfahrens wird insbesondere vorgeschlagen, dass das Funksignal gemäß genau einem vorgegebenen Funk-Standard ausgesendet wird, wobei das Funksignal die spezifischen Identifikationsdaten wenigstens in zwei voneinander unterschiedlichen Datenformaten enthält.

Bezüglich einer gattungsgemäßen Beleuchtungseinrichtung wird insbesondere vorgeschlagen, die Sendeeinrichtung ferner ausgebildet ist, das Funksignal gemäß genau einem vorgegebenen Funk-Standard auszusenden, wobei das Funksignal die spezifischen Identifikationsdaten wenigstens in zwei voneinander unterschiedlichen Datenformaten enthält.

Die Erfindung basiert auf der Erkenntnis, dass lediglich durch Gestaltung des Funksignals, vorzugsweise innerhalb des durch den jeweiligen Funk-Standard vorgegebenen Rahmens, unterschiedliche Beacon-Protokolle realisiert werden können, sodass vorzugsweise lediglich genau ein einziger vorgegebener Funk-Standard eingesetzt zu werden braucht. Dabei ist es möglich, durch Vorsehen der spezifischen Identifikationsdaten in wenigstens zwei voneinander unterschiedlichen Datenformaten das Funksignal so auszugestalten, dass es von dem jeweiligen Kommunikationsendgerät, welches das entsprechende Datenformat nutzt, als für das Kommunikationsendgerät geeignetes Funksignal eines Beacon erkennt. Dadurch brauchen für die Anwendung der Beacon-Technologie für Kommunikationsendgeräte, die auf unterschiedlichen Datenformaten basieren, keine separaten Beacon beziehungsweise Sendeeinrichtungen mehr vorgesehen zu werden.

Besonders vorteilhaft erweist es sich, wenn diese Sendeeinrichtung beziehungsweise der Beacon lediglich eine einzige Funkeinheit benötigt, um das Funksignal mit den unterschiedlichen Datenformaten aussenden zu können. Es kann jedoch daneben auch vorgesehen sein, dass zwei oder mehrere Funkeinheiten vorgesehen sind, die jeweiligen Datenformaten zugeordnet sind. Die Funkeinheiten können untereinander in Kommunikationsverbindung stehen, sodass das Aussenden des Funksignals durch die Funkeinheiten in geeigneter Weise synchronisiert werden kann. Zu diesem Zweck kann auch vorgesehen sein, dass die Sendeeinrichtung eine Steuereinheit aufweist, an die die Funkeinheiten angeschlossen sind und die die Funkeinheiten entsprechend steuert. Beispielsweise kann vorgesehen sein, dass die Steuereinheit die spezifischen Identifikationsdaten für die Funkeinheiten bereitstellt, die Funkeinheiten diese dann formatieren und entsprechend synchronisiert das Funksignal aussenden. Es kann auch vorgesehen sein, dass, wenn lediglich eine einzige Funkeinheit zum Aussenden des Funksignals vorgesehen ist, die Steuereinheit die spezifischen Identifikationsdaten in den wenigstens zwei voneinander unterschiedlichen Datenformaten formatiert und ein entsprechendes Steuersignal an die Funkeinheit übermittelt, welche dann das Funksignal aussendet.

Die Sendeeinrichtung beziehungsweise der Beacon weisen darüber hinaus auch eine Empfangseinheit auf, die es ermöglicht, vorzugsweise per Funk, insbesondere per Nahfunk, ein Kommunikationssignal zu empfangen, und zwar von einem Kommunikationsendgerät, welches sich in Kommunikationsreichweite zum Beacon befindet, wodurch dann eine Sende-Empfangs-Einrichtung gebildet wird. Dadurch ist es möglich, zusätzliche Funktionalität bereitzustellen, indem beaconseitig das Kommunikationssignal ausgewertet wird und aufgrund der hierdurch gewonnenen Daten ergänzend zum Funksignal weitere Daten ausgesendet werden können, beispielsweise in Bezug auf eine Funktion der Beleuchtungseinrichtung, bestückte Leuchtmittel der Leuchteinrichtung der Beleuchtungseinrichtung, verfügbare Datenformate und/oder dergleichen. Nahfunk meint vorliegend insbesondere, dass mittels einer Funkverbindung eine Kommunikationsreichweite in einem Bereich von einigen Metern, beispielsweise in einem Bereich von etwa 0,2m bis etwa 25m, vorzugsweise in einem Bereich von etwa 0,5m bis etwa 10m, besonders bevorzugt in einem Bereich von etwa 0,5m bis etwa 5m, erreicht werden kann.

Ferner empfängt die Sendeeinrichtung mittels einer Empfangseinheit ein Endgerätesignal eines Kommunikationsendgerätes, dessen Datenformat ermittelt und das Funksignal mit den spezifischen Identifikationsdaten gemäß dem ermittelten Datenformat aussendet. Dadurch kann die Sendeeinrichtung in hochflexibler Weise auf spezifische Kommunikationsendgeräte und hier insbesondere auf das von einem jeweiligen Kommunikationsendgerät genutzte Datenformat reagieren. Beispielsweise kann vorgesehen sein, dass die Sendeeinrichtung beziehungsweise der Beacon das Aussenden der spezifischen Identifikationsdaten gemäß dem empfangenen Datenformat umschaltet. Dies hat den Vorteil, dass die Sendeeinrichtung beziehungsweise der Beacon nicht jedes der Datenformate regelmäßig auszusenden braucht. Es kann auf diese Weise eine einfache spezifische Adaption im bestimmungsgemäßen Betrieb der Sendeeinrichtung beziehungsweise Beacon erreicht werden.

Dabei erlaubt es die Erfindung, aufgrund der Anordnung der Sendeeinrichtung beziehungsweise des Beacon eine bestehende Energie- und/oder Kommunikationsschnittstelle einer Lichtinstallation beziehungsweise der Beleuchtungseinrichtung oder auch eines Leuchtmittels der Beleuchtungseinrichtung für die Energieversorgung einer oder mehrerer der Sendeeinrichtungen beziehungsweise Beacons zu nutzen, wobei dies sekundärseitig und/oder primärseitig auch beispielsweise Kommunikationsschnittstellen eines elektronischen Vorschaltgerätes (ECG) der Leuchteinrichtung sowie Kommunikations- und/oder kombinierte Energie- und Kommunikationsschnittstellen umfassen kann.

Eine Möglichkeit, bei der ein separater Energiewandler für die Sendeeinrichtung beziehungsweise den Beacon eingespart werden kann, ist ferner ein elektrischer Anschluss der Sendeeinrichtung beziehungsweise des Beacon parallel zu einem Leuchtmittel, insbesondere zu einer Leuchtdioden-Einheit beziehungsweise einer Gruppe von Leuchtdioden oder unter Umständen einem Leuchtdioden-Trägermodul und/oder dergleichen.

Die Erfindung schlägt insbesondere vor, zwei oder mehr Funksignale, zum Beispiel mehrere Beacon-Signale des gleichen Protokolls, mit unterschiedlichem Inhalt oder verschiedenen Beacon-Protokollen parallel basierend auf einem einzigen Funk-Standard wie dem Bluetooth-Low-Energy-Standard, einem WLAN-Standard oder dergleichen, mithilfe einer oder mehrerer Sendeeinrichtungen beziehungsweise Beacons auszusenden, wobei die Sendeeinrichtung beziehungsweise der Beacon vorzugsweise über die Leuchteinrichtung der Beleuchtungseinrichtung mit elektrischer Energie versorgt sein kann.

Es kann vorgesehen sein, dass Parameter des Funksignals bedarfsgerecht eingestellt werden können, um beispielsweise besser an das jeweilige Datenformat angepasst zu sein. Ein Parameter des Funksignals kann dabei zum Beispiel eine Trägerfrequenz, eine Sendeleistung, eine Phasenlage, eine Bandbreite des Funksignals, eine Signalart, eine Informationsart und/oder dergleichen sein. Mittels der Sendeeinrichtung sollen vorzugsweise mehrere Dienste beziehungsweise Services, vorzugsweise parallel, angeboten werden können. Beispielsweise kann für einen Dienst A eine hohe Positionsgenauigkeit erforderlich sein, sodass das entsprechende Funksignal mit dem entsprechenden Datenformat mit einer geringen Sendeleistung aber dafür einer hohen Ortsauflösung ausgesendet wird. Bei einem Dienst B hingegen könnte beispielsweise stattdessen eine möglichst große Reichweite gewünscht sein. Entsprechend kann bei einem Aussenden des Signals B eine hohe Sendeleistung mit geringerer Ortsauflösung vorgesehen sein. Entsprechend können Signalabschnitte des Funksignals vorgesehen sein, die spezifisch für die jeweiligen genutzten Datenformate angepasst werden können.

Vorzugsweise wird vorgeschlagen, dass das Funksignal zeitlich in einer Anzahl von aufeinanderfolgenden Signalabschnitten eingeteilt wird, wobei die Anzahl der Signalabschnitte wenigstens einer Anzahl der voneinander unterschiedlichen Datenformate entspricht, wobei jedem Datenformat wenigstens einer der Signalabschnitte zugeordnet wird. Dadurch ist es möglich, das Funksignal, welches lediglich ein einziges Funksignal zu sein braucht, für das Aussenden der unterschiedlichen Datenformate anzupassen. Dabei kann natürlich vorgesehen sein, dass jedem Datenformat wenigstens einer der Signalabschnitte zugeordnet wird. Es können aber auch einem Datenformat mehr als lediglich ein einziger Signalabschnitt zugeordnet werden. Darüber hinaus besteht auch die Möglichkeit, einzelne Signalabschnitte keinem der Datenformate zuzuordnen, wodurch dann zum Beispiel das Funksignal eine Sendepause enthalten kann. Je nach Bedarf des jeweiligen Datenformats können somit auch Häufigkeiten der Aussendung der spezifischen Identifikationsdaten beeinflusst werden, indem beispielsweise ein häufig auszusendendes Datenformat mehreren Sendeabschnitten zugeordnet wird, wobei ein weniger häufig auszusendendes Datenformat weniger Sendeabschnitten zugeordnet wird. Dem Grunde nach besteht natürlich die Möglichkeit, das Funksignal in eine nahezu endlose Abfolge von aufeinanderfolgenden Signalabschnitten einzuteilen, wobei die Datenformate entsprechend zugeordnet werden und so ein Zuordnungsmuster bilden können. Es kann aber auch vorgesehen sein, dass das Funksignal selbst insgesamt einen vorgegebenen Funksignalzeitraum einnimmt, der in die zeitlich aufeinanderfolgende Signalabschnitte eingeteilt wird.

Vorzugsweise hängt ein Zeitraum für einen jeweiligen der Signalabschnitte von dem jeweils zugeordneten Datenformat ab. Dies berücksichtigt, dass die spezifischen Identifikationsdaten in den jeweiligen Datenformaten unterschiedliche lange Zeiträume benötigen können. Dadurch kann die Nutzung des Funksignals weiter verbessert werden. So kann vorgesehen sein, dass die Zeiträume der Signalabschnitte derart bemessen sind, dass das Funksignal vorzugsweise im Wesentlichen unterbrechungslos Daten aussendet. Es kann aber auch vorgesehen sein, dass einzelne oder alle Zeiträume für die jeweiligen Signalabschnitte einen Pausenzeitraum umfassen, damit die jeweiligen Signalabschnitte auf einfache Weise als getrennte Signalabschnitte erkannt werden können. Die Pausenzeiträume können auch mit einem geeigneten Synchronisationssignal belegt sein.

Vorzugsweise wird das jedem Signalabschnitt zugeordnete Datenformat durch eine jeweilige an das jeweilige Datenformat angepasste Formatierungseinheit der Sendeeinrichtung bereitgestellt. Dies erlaubt eine einfache Erzeugung beziehungsweise Bereitstellung der spezifischen Identifikationsdaten in dem jeweiligen Datenformat. Die Formatierungseinheit kann jedoch auch dazu ausgebildet sein, wenigstens zwei oder gegebenenfalls auch mehrere Datenformate bereitstellen zu können. In dieser Ausgestaltung kann die Formatierungseinheit entsprechend umschaltbar ausgebildet sein, sodass sie entsprechend eines vorgegebenen Schaltzustands die spezifischen Identifikationsdaten in dem dem jeweiligen Schaltzustand entsprechenden Datenformat bereitstellt. Die Formatierungseinheit kann diesbezüglich ein Teil der vorgenannten Steuereinheit aber auch gegebenenfalls auch ein Teil der einzigen Funkeinheit, insbesondere wenn nur eine einzige Funkeinheit vorgesehen ist, sein.

Gemäß einer Weiterbildung wird vorgeschlagen, dass mit einem Erreichen eines zeitlichen Endes des Zeitraums eines ersten der Signalabschnitte automatisiert ein Bereitstellen der spezifischen Identifikationsdaten gemäß einem einem zweiten Signalabschnitt zugeordneten Datenformat ausgelöst wird, welcher zweite Signalabschnitt dem ersten Signalabschnitt unmittelbar folgt. Hierbei ist vorgesehen, dass die spezifischen Identifikationsdaten in dem jeweiligen Datenformat für den jeweiligen zugeordneten Sendeabschnitt unmittelbar erzeugt werden. Dies eignet sich insbesondere dazu, Sendeeinrichtungen beziehungsweise Beacons standardisiert herzustellen und erst danach mit den individuellen spezifischen Identifikationsdaten zu versehen, die dann in der Sendeeinrichtung beziehungsweise dem Beacon gespeichert werden. Dadurch können die Hardwareeinrichtungen der Sendeeinrichtung beziehungsweise des Beacon standardisiert werden, sodass eine günstige Herstellung ermöglicht ist.

Vorzugsweise ist vorgesehen, dass jeder Signalabschnitt von einer eigenen, dem jeweiligen Signalabschnitt zugeordneten Funkeinheit der Sendeeinrichtung ausgesendet wird. Die Funkeinheiten senden somit gemeinsam das Funksignal aus, und zwar vorzugsweise im Zeitmultiplex, sodass jede Funkeinheit den ihr zugeordneten Signalabschnitt aussendet. Dadurch das Funksignal durch die Funkeinheiten spezifisch an das jeweilige zugeordnete Datenformat angepasst ausgesendet werden. Vorzugsweise wird das Funksignal durch Zusammenfügen der jeweiligen Sendeabschnitte der Funkeinheiten bereitgestellt.

Darüber hinaus wird vorgeschlagen, dass zumindest zwischen den Funkeinheiten der Sendeeinrichtung eine Kommunikationsverbindung besteht. Vorzugsweise besteht die Kommunikationsverbindung auch zwischen Funkeinheiten von Sendeeinrichtungen unterschiedlicher Beleuchtungseinrichtungen, sodass ein Kommunikationsnetzwerk nach Art eines Mesh-Netzes ausgebildet werden kann. Dadurch ist es möglich, die unterschiedlichen Sendeeinrichtungen insbesondere deren Funkeinheiten in geeigneter Weise zu synchronisieren, sodass eine vorzugsweise ungestörte Aussendung der jeweiligen Funksignale ermöglicht werden kann. Beispielsweise kann vorgesehen sein, dass Funksignale von Sendeeinrichtungen benachbarter Beleuchtungseinrichtungen so synchronisiert werden, dass sie sich zeitlich möglichst wenig überlappen, sodass ein möglichst ungestörter Empfang der Funksignale der Beleuchtungseinrichtungen durch das jeweilige Kommunikationsendgerät erreicht werden kann. Dabei kann bezüglich der Synchronisation auch eine Kommunikationsreichweite zwischen Kommunikationsendgeräten und der jeweiligen Sendeeinrichtung beziehungsweise Beacon berücksichtigt werden. So kann zum Beispiel bei voneinander weit entfernten Sendeeinrichtungen beziehungsweise Beacon durchaus eine Überlappung zulässig sein, wenn nämlich die Kommunikationsreichweite durch den jeweiligen Abstand der Sendeeinrichtungen so deutlich überschritten wird, dass das jeweilige Kommunikationsendgerät die Funksignale der Sendeeinrichtungen ungestört zu empfangen vermag.

Besonders vorteilhaft erweist es sich, wenn jeweils nur die einem jeweiligen aktiven Signalabschnitt zugeordnete der Funkeinheiten mit elektrischer Energie versorgt wird. Dadurch kann ein besonders energieeffizienter Betrieb der Sendeeinrichtungen beziehungsweise Beacons erreicht werden. Die Versorgung der Funkeinheiten mit elektrischer Energie kann beispielsweise mittels der Steuereinheit gesteuert werden.

Ferner wird vorgeschlagen, dass wenigstens zwei der Signalabschnitte von einer einzigen Funkeinheit ausgesendet werden, welche Signalabschnitte die spezifischen Identifikationsdaten in zwei voneinander unterschiedlichen Datenformaten enthalten. Hierbei ist vorgesehen, dass die Funkeinheit ausgebildet ist, die spezifischen Identifikationsdaten in wenigstens zwei voneinander unterschiedlichen Datenformaten aussenden zu können. Es kann darüber hinaus vorgesehen sein, dass weitere Funkeinheiten vorgesehen sind, die die spezifischen Identifikationsdaten gemäß einem weiteren Datenformat aussenden, welches beispielsweise mittels der ersten Funkeinheit nicht realisiert werden könnte. Insgesamt kann hierdurch erreicht werden, dass die Anzahl der erforderlichen Funkeinheiten möglichst gering gehalten werden kann. Vorzugsweise braucht lediglich eine einzige Funkeinheit vorgesehen zu werden, die dann dafür ausgebildet ist, sämtliche der voneinander unterschiedlichen Datenformate nutzen zu können.

Besonders vorteilhaft erweist es sich, wenn die Funkeinheit bezüglich einer Anzahl der bereitzustellenden Signalabschnitte und/oder der den jeweiligen Signalabschnitten zugeordneten Datenformate eingestellt wird. Dadurch können standardisierte Funkeinheiten für die Sendeeinrichtung bereitgestellt werden, die bedarfsgerecht gegebenenfalls auch noch nach einer Installation der Beleuchtungseinrichtung entsprechend angepasst werden können, um eine möglichst breite Nutzung der Beacon-Technologie ermöglichen zu können. Zu diesem Zweck kann vorgesehen sein, dass die Sendeeinrichtung beziehungsweise der Beacon die Empfangseinheit umfasst, über die die Funkeinheit entsprechend eingestellt werden kann. Das Einstellen kann beispielsweise dadurch erfolgen, dass eine entsprechende Programmierung einer Rechnereinheit der Sendeeinrichtung beziehungsweise der Funkeinheit vorgenommen wird. Dies kann beispielsweise im Rahmen eines Firmware-Updates oder dergleichen erfolgen.

Weiterhin wird vorgeschlagen, dass das Funksignal zumindest in einen Bereich ausgesendet wird, der mittels der die Sendeeinrichtung umfassenden Beleuchtungseinrichtung im bestimmungsgemäßen Beleuchtungsbetrieb beleuchtet wird. Dadurch kann erreicht werden, dass zumindest im beleuchtbaren Bereich der Beleuchtungseinrichtung auch das der zugeordneten Sendeeinrichtung beziehungsweise des Beacon entsprechende Funksignal empfangen werden kann. Es kann aber auch vorgesehen sein, dass das Funksignal über den beleuchtbaren Bereich hinaus empfangen werden kann.

Vorzugsweise wird das Aussenden des Funksignals in einem vorgegebenen Zeitabschnitt wiederholt. Dies richtet sich insbesondere an Funksignale, deren zeitliche Erstreckung begrenzt ist, beispielsweise auf einen entsprechenden Funksignalzeitraum oder dergleichen. Somit braucht kein kontinuierliches Aussenden des Funksignals vorliegen, wodurch einerseits Energie eingespart werden kann und andererseits ein Zeitraum geschaffen werden kann, in dem andere Sendeeinrichtungen beziehungsweise Beacon ihre Funksignale möglichst ungestört aussenden können. Insgesamt kann hierdurch die Funktionalität eines Beleuchtungssystems mit mehreren Beleuchtungseinrichtungen, die Sendeeinrichtungen beziehungsweise Beacons umfassen, verbessert werden.

Vorteilhaft erweist es sich ferner, wenn, insbesondere das ermittelte Datenformat mit den Datenformaten verglichen, und dem ermittelten Datenformat einer der Signalabschnitte zugeordnet wird. Die Zuordnung des Signalabschnitts kann dadurch erfolgen, dass ein freier Signalabschnitt dem ermittelten Datenformat zugeordnet wird. Es kann aber auch sein, dass ein bereits einem Datenformat zugeordneter Signalabschnitt dem nunmehr ermittelten Datenformat zugeordnet wird. Dadurch kann die Flexibilität in Bezug auf die Nutzung der Beacon-Technologie weiter verbessert werden.

Die bezüglich des erfindungsgemäßen Verfahrens angegebenen Ausführungsvarianten sowie Vorteile und Wirkungen gelten gleichermaßen sinngemäß auch für die erfindungsgemäße Beleuchtungseinrichtung sowie umgekehrt. Dabei können jeweilige Verfahrensmerkmale als funktionelle Merkmale für hierzu geeignete Mittel angesehen werden.

Weitere Vorteile und Merkmale ergeben sich durch die im Folgenden angegebenen Ausführungsbeispiele anhand der beigefügten Figuren. In den Figuren bezeichnen gleiche Bezugszeichen gleiche Merkmale und Funktionen.

### Es zeigen:

- Fig. 1: in einer schematischen Blockdarstellung eine Integration eines Beacon als Sendeeinrichtung in eine Beleuchtungseinrichtung eines mehrere Beleuchtungseinrichtungen aufweisenden Beleuchtungssystems,
- Fig. 2: eine schematische Blockdarstellung einer ersten Ausgestaltung für eine Beleuchtungseinrichtung gemäß der Erfindung,
- Fig. 3: eine schematische Blockdarstellung einer zweiten Ausgestaltung für eine Beleuchtungseinrichtung gemäß der Erfindung und
- Fig. 4: eine schematische Blockdarstellung einer dritten Ausgestaltung für eine Beleuchtungseinrichtung gemäß der Erfindung.

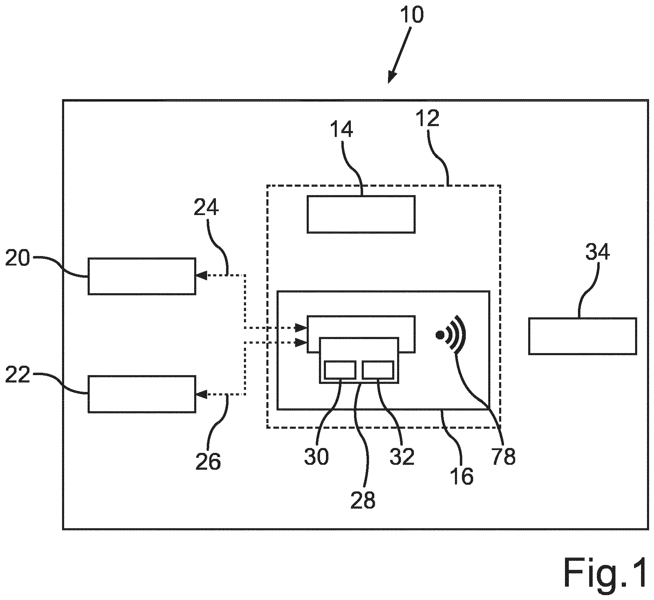

Fig. 1 zeigt in einer schematischen Blockdarstellung ein Beleuchtungssystem 10, welches eine Beleuchtungseinrichtung 12 sowie eine Mehrzahl von weiteren Beleuchtungseinrichtungen 20 umfasst. Jede der Beleuchtungseinrichtungen 12, 20 weist eine Leuchteinrichtung 14 mit einem oder auch mehreren nicht weiter dargestellten Leuchtmitteln zum Abgeben von Licht sowie einen Beacon 16 als Sendeeinrichtung auf. Der Beacon 16 ist vorliegend in der Leuchteinrichtung 14 angeordnet. Der Beacon 16 sendet ein Funksignal 78 mit für den Beacon 16 spezifischen Identifikationsdeten nach Art von Rundfunk unidirektional drahtlos aus. Das Aussenden erfolgt vorliegend unter Nutzung von Nahfunk basierend auf einem Bluetooth-Low-Energy-Protokoll (BLE).

Der Beacon 16 umfasst eine Steuereinheit 28, die eine Rechnereinheit 30 sowie eine mit der Rechnereinheit 30 kommunikationstechnisch gekoppelte Speichereinheit 32 umfasst. In der Speichereinheit 32 ist ein ablauffähiges Rechnerprogramm für die Rechnereinheit 30 gespeichert, sodass mit der Rechnereinheit 30 eine vorgegebene Funktionalität bereitgestellt werden kann. Vorliegend dient die Funktionalität dazu, den Beacon 16 in vorgebbarer Weise zu betreiben. Die weiteren Beleuchtungseinrichtungen 20 sind dem Grunde nach vergleichbar zu der Beleuchtungseinrichtung 12 aufgebaut.

Vorliegend ist der Beacon 16 als Sende-Empfangs-Einrichtung ausgebildet, der neben dem Aussenden des Funksignals 78 auch eine bidirektionale Kommunikationsverbindung 24 bereitstellen kann. Über die Kommunikationsverbindung 24 steht die Beleuchtungseinrichtung 12, und hier insbesondere der Beacon 16, mit den weiteren Beleuchtungseinrichtungen 20 in Kommunikationsverbindung, die entsprechend ausgebildet sind.

Die Kommunikationsverbindung 24 ist vorliegend eine bidirektionale Kommunikationsverbindung, die ebenfalls auf Nahfunk basiert und den vorgenannten BLE-Standard nutzt. Darüber hinaus steht die Beleuchtungseinrichtung 12, und hier ebenfalls wieder insbesondere der Beacon 16, über eine weitere Kommunikationsverbindung 26 mit einer Infrastruktureinrichtung 22 in Kommunikationsverbindung, über die Daten betreffend einen bestimmungsgemäßen Betrieb der Beleuchtungseinrichtung 12 sowie auch Daten bezüglich der weiteren Beleuchtungseinrichtungen 20 ausgetauscht werden können. Die Beleuchtungseinrichtung 12, und hier insbesondere deren Beacon 16, dienen demnach zugleich auch als Einrichtung zum Weiterleiten von entsprechenden Daten von der Infrastruktureinrichtung 22 zu den Beleuchtungseinrichtungen 20 und umgekehrt, zum Beispiel nach Art eines Netzwerkknotens.

Das vom Beacon 16 beziehungsweise den Beacons der Beleuchtungseinrichtungen 20 ausgesendete Funksignal 78 kann von einem oder auch mehreren Kommunikationsendgeräten 34 empfangen und ausgewertet werden. Das Kommunikationsendgerät 34 ist vorliegend ein Mobilfunkendgerät nach Art eines Smartphones. In der vorliegenden Ausgestaltung ist lediglich vorgesehen, dass die Kommunikationsendgeräte 34 das Funksignal 78 empfangen und auswerten. Eine Kommunikation erfolgt deshalb lediglich unidirektional. Nicht dargestellte Beacons der weiteren Beleuchtungseinrichtungen 20 können ebenfalls mit dem Kommunikationsendgerät 34 empfangen werden. Dadurch können mittels des Kommunikationsendgeräts 34 eine Reihe von Diensten zur Verfügung gestellt beziehungsweise ermöglicht werden, die es einem Nutzer des Kommunikationsendgeräts 34 ermöglicht, unterschiedlichste zusätzliche Dienste zu nutzen.

Innerhalb eines vorgegebenen Bereichs, in dem die Beleuchtungseinrichtungen 12, 20 angeordnet sind und in dem das Funksignal 78 vom Kommunikationsendgerät 34 empfangen werden kann, kann sich der Nutzer des Kommunikationsendgeräts 34 damit besser orientieren beziehungsweise navigieren sowie auch andere lokale, insbesondere digitale, Dienste ausfindig machen und nutzen, wie zum Beispiel Apps, App-Funktionen, Google Maps, Lightify, Lichtsteuerung und/oder dergleichen. Das Beleuchtungssystem 10 mit den in den jeweiligen Beleuchtungseinrichtungen 12, 20 angeordneten Beacon 16 ermöglicht für die vorgenannten Nutzerpotenziale ein Ortungsbeziehungsweise Orientierungssystem. Insbesondere ist es möglich, eine genaue Selbstortung des Kommunikationsendgerätes 34 bereitzustellen, wodurch Dienste nutzbar werden, wie etwa die Navigation oder die Bereitstellung von ortsspezifischen Informationen.

Ein Aspekt der Beacon-Technologie ist die Möglichkeit zur Konfiguration typischer Parameter, wie zum Beispiel eine Signalstärke und/oder ein Sendeintervall des Funksignals 78 des Beacon 16. Mit unterschiedlichen Konfigurationen können verschiedene Anwendungsszenarien individuell unterstützt werden. Wird zum Beispiel eine hohe Servicequalität, beispielsweise eine genaue Lokalisierung in kurzen Abständen, gewünscht, wie sie insbesondere bei einer Indoor-Navigation erforderlich ist, können vorzugsweise sehr kurze Sendeintervalle konfiguriert sein.

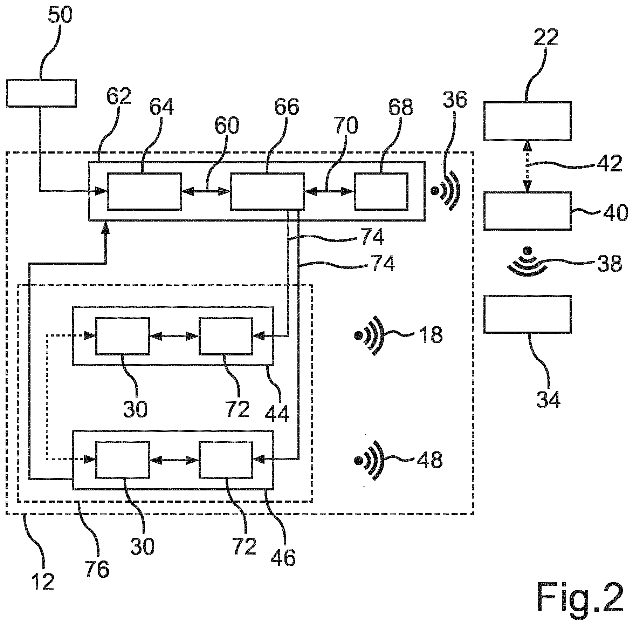

Fig. 2 zeigt in einer schematischen Blockdarstellung eine erste Ausgestaltung für eine Beleuchtungseinrichtung 12, die dem Grunde nach der Beleuchtungseinrichtung 12, wie sie bereits zur Fig. 1 beschrieben worden ist, entspricht. Die Beleuchtungseinrichtung 12 gemäß Fig. 2 weist einen Beacon 76 mit zwei Funkeinheiten 44, 46 als Sendeeinrichtung sowie eine Leuchteinrichtung 62 auf. Der Beacon 76 mit seinen Funkeinheiten 44, 46 ist vorliegend in der Leuchteinrichtung 62 angeordnet und ausgebildet, ein jeweiliges funkeinheitsspezifisches Funksignal mit Signalabschnitten 18, 48 mit für den Beacon 76 spezifischen Identifikationsdaten drahtlos per Nahfunk gemäß dem BLE-Standard als Funk-Standard auszusenden. Beide Funkeinheiten 44, 46 sind ausgebildet, das Funksignal gemäß genau diesem einen Funkstandard auszusenden. Das Funksignal besteht vorliegend aus zwei Sendeabschnitten, nämlich einem ersten Sendeabschnitt 18, der durch die Funkeinheit 44 bereitgestellt wird, und einem zweiten Sendeabschnitt 48, der durch die Funkeinheit 46 bereitgestellt wird.

Das Funksignal enthält in den Signalabschnitten 18, 48 die spezifischen Identifikationsdaten des Beacon 76 in vorliegend zwei voneinander unterschiedlichen Datenformaten. Die unterschiedlichen Funkeinheiten 44, 46 sind dabei entsprechend der jeweiligen Datenformate ausgebildet. Hierfür können initial Sende-Parameter wie zum Beispiel ein Sendeintervall, eine Signalintensität und/oder dergleichen, festgelegt werden, zum Beispiel im Rahmen einer Herstellung des Gesamtsystems.

Vorliegend ist ferner vorgesehen, dass die Funkeinheit 44 nach einem Einschalten unmittelbar alle 50ms zum Aussenden der spezifischen Identifikationsdaten des Beacon 76 ein Datenformat gemäß Protokoll F nutzt, wohingegen die Funkeinheit 46 mit einer initialen Verzögerung von 25ms die spezifischen Identifikationsdaten des Beacon 76 gemäß einem Datenformat basierend auf einem Protokoll G ebenfalls alle 50ms aussendet. Alternativ oder ergänzend kann eine direkte bidirektionale Kommunikation zwischen den Funkeinheiten 44, 46 oder auch eine zentrale Informationsverarbeitung, beispielsweise eines elektronischen Vorschaltgerätes 66, realisiert werden. Im zuerst genannten Fall ist vorzugsweise eine Kommunikationsverbindung zwischen den Funkeinheiten 44, 46 vorgesehen, wohingegen im zweitgenannten Fall jeweils eine Kommunikationsverbindung der jeweiligen der Funkeinheiten 44, 46 zu der zentralen Informationsverarbeitung vorgesehen ist. Dabei kann vorgesehen sein, dass die Funkeinheiten 44, 46 die Signalabschnitte 18, 48 des Funksignals in einem jeweiligen definierten Rhythmus, zum Beispiel abwechselnd, aussenden, um vorzugsweise zu gewährleisten, dass sich die ausgesendeten Signalabschnitte 18, 48 möglichst nicht gegenseitig beeinflussen. So kann beispielsweise vorgesehen sein, dass die Funkeinheit 44 im Rhythmus von 100ms ihr Signal aussendet und die Funkeinheit 46 ihr Signal ebenfalls im Rhythmus von 100ms aussendet, wobei jedoch das Aussenden der Signale jeweils zeitlich um 50ms versetzt ist.

Dadurch können sich verschiedene konstruktive Hebel beziehungsweise Anforderungen für die Anordnung des Beacon 76 innerhalb der Beleuchtungseinrichtung 12 ergeben, beispielsweise in Bezug auf eine Anordnung von Systemelementen innerhalb des Gesamtsystems oder dergleichen.

Ferner ist vorliegend vorgesehen, dass das Aussenden des Funksignals mit den Signalabschnitten 18, 48 in Richtung des von der Leuchteinrichtung 62 emittierten Lichts 36 erfolgt. Dadurch besteht für den Nutzer zugleich auch eine optisch wahrnehmbare Begrenzung der Kommunikationsreichweite zum Beacon 76.

Der Beacon 76 ist vorzugsweise in der Leuchteinrichtung 62 und hier insbesondere in einem nicht dargestellten Gehäuse der Leuchteinrichtung 62 angeordnet. Die Anordnung ist derart vorgesehen, dass negative Einflüsse aufgrund einer elektromagnetischen Verträglichkeit, insbesondere in Bezug auf die Energieversorgung der Leuchteinrichtung 62 möglichst gering sind.

Elektronische Baugruppen des Beacon 76, beispielsweise die Funkeinheiten 44, 46, sind innerhalb der Leuchteinrichtung 62, beispielsweise in Sockel-Bereichen, auch Endkappen beziehungsweise Endbereiche genannt, angeordnet. Dadurch kann eine optische Abschattung von Leuchtmitteln der Leuchteinrichtung 62, die vorliegend vorzugsweise durch Leuchtdiodenmodule gebildet sind, vermieden werden. Zugleich kann durch eine symmetrische Anordnung eine symmetrische Abstrahlcharakteristik erreicht werden.

In der vorliegenden Ausgestaltung ist vorgesehen, dass das Funksignal zwei Signalabschnitte aufweist, nämlich einen ersten Signalabschnitt, der durch die Funkeinheit 44 bereitgestellt wird, und einen zweiten Signalabschnitt, der durch die Funkeinheit 46 bereitgestellt wird. Die Funkeinheiten 44, 46 sind so aufeinander abgestimmt, dass sie vorliegend abwechselnd die spezifischen Identifikationsdaten gemäß dem Ihnen zugeordneten Datenformat aussenden. Dadurch kann erreicht werden, dass einerseits Dienste für unterschiedliche Kommunikationsendgeräte wie dem Kommunikationsendgerät 34 bereitgestellt werden können, und andererseits kann sichergestellt werden, dass sich die Signalabschnitte 18, 48 gegenseitig möglichst nicht beeinflussen.

Die Beleuchtungseinrichtung 12 gemäß Fig. 2 kann Bestandteil des Beleuchtungssystems 10 sein, wie es anhand von Fig. 1 erläutert worden ist. Die Leuchteinrichtung 62 der Beleuchtungseinrichtung 12 ist in einem oberen Bereich der Fig. 2 detailliert dargestellt. Die Leuchteinrichtung 62 umfasst vorliegend ein elektronisches Vorschaltgerät 66, eine Energieschnittstelle 64, die über einen Energieübertragungskanal 60 an das elektronische Vorschaltgerät 66 angeschlossen ist, sowie eine Leuchtdiodenanordnung 68, die über einen weiteren Energieübertragungskanal 70 an das elektronische Vorschaltgerät 66 angeschlossen ist. Über die Energieübertragungskanäle 60, 70 wird die Leuchtdiodenanordnung 68 durch das elektronische Vorschaltgerät 66 in vorgebbarer Weise mit elektrischer Energie versorgt, sodass die Leuchteinrichtung 62 das Licht 36 in vorgebbarer Weise abgibt. Zu diesem Zweck bezieht die Energieschnittstelle 64 elektrische Energie von einer Netzversorgung 50.

Das elektronische Vorschaltgerät 66 versorgt vorliegend ferner über einen Energieübertagungskanal 74 die Funkeinheiten 44, 46 des Beacon 76, und zwar jeweilige, den Funkeinheiten 44, 46 zugeordnete Energieschnittstellen 72. Dadurch kann der Beacon 76 in vorgebbarer Weise betrieben werden, insbesondere seine Funkeinheiten 44, 46 zur Aussendung des Funksignals mit den Signalabschnitten 18, 48. Die Beleuchtungseinrichtung 12 ist ferner an die Netzversorgung 50 angeschlossen, die elektrische Energie aus einem öffentlichen Energieversorgungsnetz bezieht und der Beleuchtungseinrichtung 12 zur Verfügung stellt.

Das Funksignal mit seinen Sendeabschnitten 18, 48, das vom Beacon 76 ausgesendet wird, kann - wie bereits zur Fig. 1 erläutert - mittels des Kommunikationsendgeräts 34 empfangen werden und dazu dienen, weitere Nutzungen beziehungsweise Dienste zur Verfügung zu stellen. Darüber hinaus kann das Kommunikationsendgerät 34 über eine Kommunikationsverbindung 38, die ebenfalls als Nahfunkverbindung ausgebildet ist, mit einem Router 40 in Kommunikationsverbindung stehen. Der Router 40 ist über eine leitungsgebundene Kommunikationsverbindung 42 an eine Infrastruktureinrichtung 22 angeschlossen, die vorliegend wie die Infrastruktureinrichtung 22 gemäß Fig. 1 einen Zugang zum Internet oder zu einem zentralen Dienste-Server bereitstellt.

Jede der Funkeinheiten 44, 46 nutzt die gleichen, dem Beacon 76 zugeordneten eindeutigen spezifischen Identifikationsdaten. Die Funkeinheiten 44, 46 formatieren diese spezifischen Informationsdaten, die in der jeweiligen der Funkeinheiten 44, 46 vorliegen, entsprechend dem den Funkeinheiten 44, 46 zugeordneten Datenformaten, und senden die entsprechenden Signalabschnitte 18 beziehungsweise 48 als Funksignal aus.

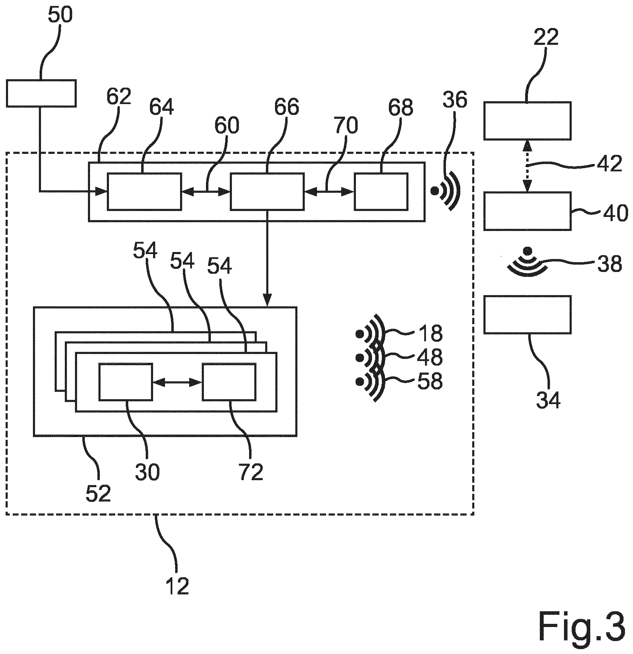

Fig. 3 zeigt eine weitere Ausgestaltung gemäß der Erfindung in einer schematischen Blockdarstellung wie Fig. 2. Die Ausgestaltung gemäß Fig. 3 unterscheidet sich von der Ausgestaltung gemäß Fig. 2 durch einen Beacon 52 als Sendeeinrichtung, der anstelle des Beacon 76 der Fig. 2 in der Beleuchtungseinrichtung 12 vorgesehen ist. Die weiteren Merkmale entsprechen denen, die bereits zu den Fig. 1 und 2 erläutert worden sind, weshalb ergänzend auf die diesbezüglichen Ausführungen verwiesen wird.

Bei dieser Variante erfolgt das Aussenden von einem Funksignal, welches aus drei Signalabschnitten 18, 48, 58 besteht, mithilfe von Funkeinheiten 54, die einem jeweiligen der Signalabschnitte 18, 48, 58 zugeordnet sind. Die Funkeinheiten 54 sind vorliegend in dem Beacon 52 integriert angeordnet, vorzugsweise auf einer gemeinsamen Leiterplatte mit einer gemeinsamen Antenne. Bezüglich der Anordnung wird auf die Ausführungen zu den vorhergehenden Ausführungsbeispielen verwiesen.

Dadurch besteht die Möglichkeit einer Nutzung einer gemeinsamen Energieschnittstelle 72 zur Energieversorgung der unterschiedlichen Funkeinheiten 54 durch die Leuchteinrichtung 62. Die Funkeinheiten 54 senden vorliegend in einem definierten Rhythmus, vorzugsweise abwechselnd ihre entsprechenden Signalabschnitte 18, 48, 58 aus, damit sich die Signalabschnitte 18, 48, 58 möglichst nicht gegenseitig beeinflussen. Die Steuerung beziehungsweise Abstimmung des Aussendens der Funkeinheiten 54 erfolgt dabei durch eine Informationsverarbeitung, die vorliegend durch eine Rechnereinheit 30 gebildet ist. In Fig. 3 ist dargestellt, dass jede der Funkeinheiten 54 eine Rechnereinheit 30 umfasst. In einer alternativen Ausgestaltung kann jedoch auch vorgesehen sein, dass lediglich eine einzige Rechnereinheit 30 vorgesehen ist, die Bestandteil des Beacon 52 ist und die die Funkeinheiten 54 entsprechend steuert.

Die Ausgestaltung gemäß Fig. 3 erlaubt nicht nur die Nutzung einer gemeinsamen Energieschnittstelle zum Zwecke der Energieversorgung durch die Leuchteinrichtung 62, sondern erlaubt es zugleich, den in der Regel sehr begrenzten Bauraum innerhalb der Beleuchtungseinrichtung 12 optimal zu nutzen. Die Funkeinheiten 54 sind vorzugsweise aufeinander abgestimmt. Das Aussenden der entsprechenden Signalabschnitte 18, 48, 58 als Funksignal kann ebenfalls zeitlich versetzt vorgesehen sein.

Auf diese Weise können unterschiedliche Übertragungsprotokolle wie zum Beispiel Beacon-Protokolle für unterschiedliche Kommunikationsendgeräte 34 vom Beacon 52 zur Verfügung gestellt werden. Diese Ausgestaltung erlaubt eine flexible Konfiguration des Beacon 52 beziehungsweise eine Definition von Sendeintervallen beziehungsweise Sendeabschnitten und/oder Übertragungsprotokollen beziehungsweise Datenformaten. Die Konfiguration kann etwa drahtlos mittels BLE über ein Kommunikationsendgerät wie dem Kommunikationsendgerät 34 erfolgen, zu welchem Zweck der Beacon 52 vorzugsweise eine Empfangseinheit aufweist. Dadurch kann der Beacon 52 entsprechende Daten zur Einstellung seiner Parameter empfangen.

Auch hier kann der Beacon 52 - ebenso wie auch bei den vorherigen Ausgestaltungen - in einem oder zwei Sockel-Bereichen angeordnet sein. Auch hierdurch kann eine optische Abschattung des durch die Leuchtdiodenanordnung 68 erzeugten Lichts 36 vermieden werden.

Vorzugsweise ist der Beacon 52 ferner an einer Seite beziehungsweise in einem Endbereich der Beleuchtungseinrichtung 12 angeordnet, welcher nicht mit einer hohen Spannung einer Energieversorgung beaufschlagt ist. Dadurch können Störungen des Beacon 52, beispielsweise aufgrund von elektromagnetischen Störungen, weitgehend vermieden werden.

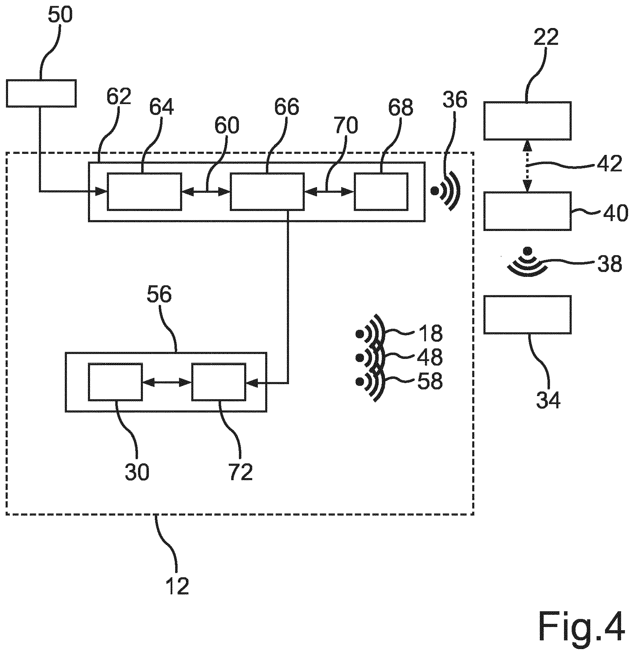

Fig. 4 zeigt eine weitere schematische Blockdarstellung für ein weiteres Ausführungsbeispiel gemäß der Erfindung. Das Ausführungsbeispiel gemäß Fig. 4 basiert dem Grunde nach auf dem Ausführungsbeispiel gemäß Fig. 3, wobei lediglich anstelle des Beacon 52 ein Beacon 56 vorgesehen ist. Bezüglich der weiteren Merkmale und Funktionen wird auf die Ausführungen zum Ausführungsbeispiel gemäß Fig. 3 verwiesen.

Bei der Ausgestaltung gemäß Fig. 4 ist der Beacon 56 vorgesehen, der lediglich eine einzige nicht weiter dargestellte Funkeinheit umfasst, die ausgebildet ist, das Funksignal mit den Signalabschnitten 18, 48, 58 entsprechend der jeweiligen Datenformate auszusenden. Es ist hier also lediglich eine einzige Funkeinheit mit einer einzigen Antenne vorgesehen, die hinsichtlich der nutzbaren Datenformate in den jeweiligen Signalabschnitten des Funksignals nahezu frei eingestellt werden kann. Auch hier ist vorgesehen, dass die Signalabschnitte 18, 48, 58 in einem vorgegebenen definierten Rhythmus, vorliegend abwechselnd, ausgesendet werden. Die Signalabschnitte 18, 48, 58 sind dabei unterschiedlichen Beacon-Protokollen zugeordnet. Entsprechend sind die Datenformate für diese Signalabschnitte 18, 48, 58 gewählt.

Diese Ausgestaltung erlaubt es, den Beacon 56 nahezu beliebig hinsichtlich der Datenformate und der Anzahl der unterschiedlich bereitzustellenden Datenformate einzustellen. Dadurch kann eine hohe Flexibilität erreicht werden, weil der Beacon 56 nahezu beliebig, insbesondere auch an nachträglich, an neu zu implementierende Datenformate angepasst werden kann. Zu diesem Zweck umfasst der Beacon 56 - ebenso wie der Beacon 52 - eine nicht näher dargestellte Empfangseinheit, die es erlaubt, die Daten bezüglich einzustellender Parameter und Datenformate zu erhalten. Die Rechnereinheit 30 ist dann ausgebildet, den Beacon 56 entsprechend einzustellen. Diese Ausgestaltung ist insbesondere hinsichtlich des Aufwands bezüglich der Hardware besonders günstig.

Die Ausgestaltung der Fig. 4 lässt sich jedoch auch noch gemäß einem weiteren Ausführungsbeispiel nutzen. Die Ausgestaltung der Fig. 4 erlaubt es nämlich auch, virtuelle Beacons als Sendeeinrichtungen bereitzustellen. Dazu können zwei oder mehrere unabhängige Funksignale vorgesehen sein, die entsprechend eigene spezifische Identifikationsdaten enthalten. Der Beacon 56 kann somit zwei oder auch mehrere spezifische Identifikationsdaten aufweisen, die entsprechend in voneinander unabhängigen Funksignalen ausgesendet werden. Dabei können die Funksignale natürlich die jeweiligen spezifischen Identifikationsdaten in voneinander unterschiedlichen Datenformaten enthalten.

Diese Ausgestaltung erlaubt es, jeden einzelnen virtuellen Beacon weitgehend unabhängig, insbesondere vollständig unabhängig, voneinander zu konfigurieren, beispielsweise unter Nutzung einer jeweiligen spezifischen Anwendung beziehungsweise App. Dabei ist vorzugsweise jeder der virtuellen Beacons im Wesentlichen frei konfigurierbar. Beispielsweise kann ein Funksignalinhalt, wie zum Beispiel die UUID oder dergleichen, eine Sendeleistung, ein Sendeintervall, eine Verschlüsselung und/oder dergleichen, weitgehend frei gewählt werden. Darüber hinaus erlaubt es diese Ausgestaltung auch zusätzlich unterschiedliche Funkprotokolle beziehungsweise Funk-Standards zu nutzen, die den jeweiligen Funksignalen der virtuellen Beacons zugeordnet werden können. Es können auch Kombinationen hiervon vorgesehen sein, sodass beispielsweise Kombinationen von bekannten Beacon-Protokollen miteinander gebildet werden können, beispielsweise eine Kombination von iBeacon, Eddiestone, AltBeacon und/oder weiteren Protokollen.

Besonders vorteilhaft kann vorgesehen sein, dass ein Rechnerprogramm, beispielsweise Software beziehungsweise Firmware oder dergleichen, für jeweilige einzelne virtuelle Beacons spezifisch vorgesehen wird. Die Rechnereinheit kann das jeweilige Softwareprogramm, das dem jeweiligen virtuellen Beacon zugeordnet ist, dabei vorzugsweise unabhängig von den restlichen virtuellen Beacons aktualisieren.

Gemäß einer Weiterbildung kann vorgesehen sein, dass unterschiedliche Kryptographieverfahren für die einzelnen virtuellen Beacons verwendet werden können, um zum Beispiel einen Zugriff für bestimmte Kommunikationsendgeräte beziehungsweise Anwendungen beziehungsweise Applikationen auf bestimmte Signale zu beschränken. Auf diese Weise können zum Beispiel auch Zugriffsberechtigungen zum Aktualisieren von Rechnerprogrammen beziehungsweise Teilen hiervon geregelt werden.

In Weiterbildungen der vorgenannten Ausführungsbeispiele kann vorgesehen sein, dass die Sendeeinrichtungen beziehungsweise Beacons über eine optionale Kommunikationsschnittstelle verfügen. Die Kommunikationsschnittstelle kann zum Beispiel zum Konfigurieren der Sendeeinrichtung beziehungsweise des Beacon, zum Beispiel durch Auswahl eines Protokolls, und/oder zum Abstimmen der Sendeeinrichtungen beziehungsweise Beacon untereinander, zum Beispiel in Bezug auf Sendeintervalle und/oder dergleichen, und/oder mit anderen Sendeeinrichtungen beziehungsweise Beacons in benachbart angeordneten Beleuchtungseinrichtungen dienen. Dabei kann vorgesehen sein, dass eine Kommunikation über ein drahtloses Datennetzwerk, zum Beispiel nach Art eines Mesh-Netzwerkes oder dergleichen, erfolgt. Weiterhin kann vorgesehen sein, dass eine Kommunikation über eine bestehende Kommunikationsschnittstelle der Beleuchtungseinrichtung 12 erfolgt, zum Beispiel über ein Lichtmanagementsystem, ein DALI (digital addressable lighting interface)-Bus und/oder dergleichen. Ferner kann eine Kommunikation auch über einen separaten Funkkanal beziehungsweise eine Funk-Technologie, wie zum Beispiel BLE, ZigBee, WLAN und/oder dergleichen erfolgen. Schließlich besteht auch die Möglichkeit, eine Kommunikation über eine kombinierte Energie- und Kommunikationsschnittstelle, wie zum Beispiel Power over Ethernet oder dergleichen, vorzusehen.

Die Ausführungsbeispiele dienen lediglich der Erläuterung der Erfindung und sollen diese nicht beschränken.

### BEZUGSZEICHENLISTE

- 10: Beleuchtungssystem
- 12: Beleuchtungseinrichtung
- 14: Leuchteinrichtung
- 16: Beacon
- 18: Signalabschnitt
- 22: Infrastruktureinrichtung
- 24: Kommunikationsverbindung
- 26: Kommunikationsverbindung
- 28: Steuereinheit
- 30: Rechnereinheit
- 32: Speichereinheit
- 34: Kommunikationsendgerät
- 36: Licht
- 38: Kommunikationsverbindung
- 40: Router
- 42: Kommunikationsverbindung
- 44: Funkeinheit
- 46: Funkeinheit
- 48: Signalabschnitt
- 50: Netzversorgung
- 52: Beacon
- 54: Funkeinheiten
- 56: Beacon
- 58: Signalabschnitt
- 60: Energieübertragungskanal
- 62: Leuchteinrichtung
- 64: Energieschnittstelle
- 66: Vorschaltgerät
- 68: Leuchtdiodenanordnung
- 70: Energieübertragungskanal
- 72: Energieschnittstelle
- 74: Energieübertagungskanal
- 76: Beacon
- 78: Funksignal

## Patentansprüche

1. Verfahren zum Betreiben von einer Sendeeinrichtung (44, 46, 52, 56) einer eine Leuchteinrichtung (62) aufweisenden Beleuchtungseinrichtung (12), wobei die Sendeeinrichtung (44, 46, 52, 56) in oder unmittelbar an der Leuchteinrichtung (62) angeordnet ist und ein Funksignal (78, 48, 58) mit für die Sendeeinrichtung (44, 46, 52, 56) spezifischen Identifikationsdaten drahtlos aussendet, wobei das Funksignal (78, 48, 58) gemäß genau einem vorgegebenen Funk-Standard ausgesendet wird, wobei das Funksignal (78, 48, 58) die spezifischen Identifikationsdaten wenigstens in zwei voneinander unterschiedlichen Datenformaten enthält, **dadurch gekennzeichnet, dass** die Sendeeinrichtung (44, 46, 52, 56) mittels einer Empfangseinheit ein Endgerätesignal eines Kommunikationsendgerätes empfängt, dessen Datenformat ermittelt und das Funksignal (78, 48, 58) mit den spezifischen Identifikationsdaten gemäß dem ermittelten Datenformat aussendet.

2. Verfahren nach Anspruch 1,
**dadurch gekennzeichnet, dass** das Funksignal (78, 48, 58) zeitlich in eine Anzahl von aufeinanderfolgenden Signalabschnitten eingeteilt wird, wobei die Anzahl der Signalabschnitte wenigstens einer Anzahl der voneinander unterschiedlichen Datenformate entspricht, wobei jedem Datenformat wenigstens einer der Signalabschnitte zugeordnet wird.

3. Verfahren nach Anspruch 2,
**dadurch gekennzeichnet, dass**
ein Zeitraum für einen jeweiligen der Signalabschnitte von dem jeweils zugeordneten Datenformat abhängt.

4. Verfahren nach Anspruch 2 oder 3,
**dadurch gekennzeichnet, dass**
das jedem Signalabschnitt zugeordnete Datenformat durch eine jeweilige an das jeweilige Datenformat angepasste Formatierungseinheit der Sendeeinrichtung (44, 46, 52, 56) bereitgestellt wird.

5. Verfahren nach einem der Ansprüche 2 bis 4,
**dadurch gekennzeichnet, dass**
mit einem Erreichen eines zeitlichen Endes des Zeitraums eines ersten der Signalabschnitte automatisiert ein Bereitstellen der spezifischen Identifikationsdaten gemäß einem einem zweiten Signalabschnitt zugeordneten Datenformat ausgelöst wird, welcher zweite Signalabschnitt dem ersten Signalabschnitt unmittelbar folgt.

6. Verfahren nach einem der Ansprüche 2 bis 5,
**dadurch gekennzeichnet, dass**
jeder Signalabschnitt von einer eigenen, dem jeweiligen Signalabschnitt zugeordneten Funkeinheit (54) der Sendeeinrichtung (44, 46, 52, 56) ausgesendet wird.

7. Verfahren nach Anspruch 6,
**dadurch gekennzeichnet, dass**
zumindest zwischen den Funkeinheiten (54) der Sendeeinrichtung (52) eine Kommunikationsverbindung besteht.

8. Verfahren nach Anspruch 6 oder 7,
**dadurch gekennzeichnet, dass**
jeweils nur die einem jeweiligen aktiven Signalabschnitt zugeordnete der Funkeinheiten (54) mit elektrischer Energie versorgt wird.

9. Verfahren nach einem der Ansprüche 6 bis 8,
**dadurch gekennzeichnet, dass**
wenigstens zwei der Signalabschnitte von einer einzigen Funkeinheit (54) ausgesendet werden, welche Signalabschnitte die spezifischen Identifikationsdaten in zwei voneinander unterschiedlichen Datenformaten enthalten.

10. Verfahren nach Anspruch 9,
**dadurch gekennzeichnet, dass**
die Funkeinheit (54) bezüglich einer Anzahl der bereitzustellenden Signalabschnitte und/oder der den jeweiligen Signalabschnitten zugeordneten Datenformate eingestellt wird.

11. Verfahren nach einem der vorhergehenden Ansprüche,
**dadurch gekennzeichnet, dass**
das Funksignal zumindest in einen Bereich ausgesendet wird, der mittels der die Sendeeinrichtung (44, 46, 52, 56) umfassenden Beleuchtungseinrichtung (12) im bestimmungsgemäßen Beleuchtungsbetrieb beleuchtet wird.

12. Verfahren nach einem der vorhergehenden Ansprüche,
**dadurch gekennzeichnet, dass**
das Aussenden des Funksignals (78, 48, 58) in einem vorgegebenen Zeitabstand wiederholt wird.

13. Verfahren nach einem der vorhergehenden Ansprüche,
**dadurch gekennzeichnet, dass**
das ermittelte Datenformat mit den Datenformaten verglichen wird und dem ermittelten Datenformat einer der Signalabschnitte zugeordnet wird.

14. Beleuchtungseinrichtung (12) mit einer Sendeeinrichtung (44, 46, 52, 56) und einer Leuchteinrichtung (62), wobei die Sendeeinrichtung (44, 46, 52, 56) in oder unmittelbar an der Leuchteinrichtung (62) angeordnet ist und ausgebildet ist, ein Funksignal (78, 48, 58) mit für die Sendeeinrichtung (44, 46, 52, 56) spezifischen Identifikationsdaten drahtlos auszusenden, wobei die Sendeeinrichtung (44, 46, 52, 56) ferner ausgebildet ist, das Funksignal (78, 48, 58) gemäß genau einem vorgegebenen Funk-Standard auszusenden, wobei das Funksignal (78, 48, 58) die spezifischen Identifikationsdaten wenigstens in zwei voneinander unterschiedlichen Datenformaten enthält,
**dadurch gekennzeichnet, dass**
die Sendeeinrichtung (44, 46, 52, 56) mittels einer Empfangseinheit ein Endgerätesignal eines Kommunikationsendgerätes empfängt, dessen Datenformat ermittelt und das Funksignal (78, 48, 58) mit den spezifischen Identifikationsdaten gemäß dem ermittelten Datenformat aussendet.

## Claims

1. A method for operating a transmitting device (44, 46, 52, 56) of an illumination device (12) comprising a lighting device (62), wherein the transmitting device (44, 46, 52, 56) is arranged in or immediately at the lighting device (62) and wirelessly emits a radio signal (78, 48, 58) with identification data specific to the transmitting device (44, 46, 52, 56), wherein the radio signal (78, 48, 58) is emitted according to exactly one preset radio standard, wherein the radio signal (78, 48, 58) contains the specific identification data at least in two data formats different from each other,
**characterized in that**
the transmitting device (44, 46, 52, 56) receives a terminal signal of a communication terminal by means of a receiving unit, ascertains the data format thereof and emits the radio signal (78, 48, 58) with the specific identification data according to the ascertained data format.

2. The method according to claim 1,
**characterized in that**
the radio signal (78, 48, 58) is temporally divided into a number of consecutive signal sections, wherein the number of the signal sections corresponds at least to a number of the data formats different from each other, wherein at least one of the signal sections is associated with each data format.

3. The method according to claim 2,
**characterized in that**
a period of time for a respective one of the signal sections depends on the respectively associated data format.

4. The method according to claim 2 or 3,
**characterized in that**
the data format associated with each signal section is provided by a respective formatting unit of the transmitting device (44, 46, 52, 56), which formatting unit is adapted to the respective data format.

5. The method according to any one of claims 2 to 4,
**characterized in that**
upon reaching a temporal end of the period of time of a first one of the signal sections, provision of the specific identification data according to a data format associated with a second signal section is triggered in automated manner, which second signal section immediately follows the first signal section.

6. The method according to any one of claims 2 to 5,
**characterized in that**
each signal section is emitted by a separate radio unit (54) of the transmitting device (44, 46, 52, 56), which radio unit is associated with the respective signal section.

7. The method according to claim 6,
**characterized in that**
a communication link exists at least between the radio units (54) of the transmitting device (52).

8. The method according to claim 6 or 7,
**characterized in that**
only that one of the radio units (54), which is associated with a respective active signal section, is respectively supplied with electrical energy.

9. The method according to any one of claims 6 to 8,
**characterized in that**
at least two of the signal sections are emitted by a single radio unit (54), which signal sections contain the specific identification data in two data formats different from each other.

10. The method according to claim 9,
**characterized in that**
the radio unit (54) is adjusted with respect to a number of the signal sections to be provided and/or of the data formats associated with the respective signal sections.

11. The method according to any one of the preceding claims,
**characterized in that**
the radio signal is emitted at least into an area, which is illuminated by means of the illumination device (12) including the transmitting device (44, 46, 52, 56) in the intended illumination operation.

12. The method according to any one of the preceding claims,
**characterized in that**
the emission of the radio signal (78, 48, 58) is repeated in a preset time interval.

13. The method according to any one of the preceding claims,
**characterized in that**
the ascertained data format is compared to the data formats and one of the signal sections is associated with the ascertained data format.

14. An illumination device (12) with a transmitting device (44, 46, 52, 56) and a lighting device (62), wherein the transmitting device (44, 46, 52, 56) is arranged in or immediately at the lighting device (62) and is formed to wirelessly emit a radio signal (78, 48, 58) with identification data specific to the transmitting device (44, 46, 52, 56), wherein the transmitting device (44, 46, 52, 56) is further formed to emit the radio signal (78, 48, 58) according to exactly one preset radio standard, wherein the radio signal (78, 48, 58) contains the specific identification data at least in two data formats different from each other,
**characterized in that**
the transmitting device (44, 46, 52, 56) receives a terminal signal of a communication terminal by means of a receiving unit, ascertains the data format thereof and emits the radio signal (78, 48, 58) with the specific identification data according to the ascertained data format.

## Revendications

1. Procédé pour faire fonctionner un dispositif émetteur (44, 46, 52, 56) d'un dispositif d'éclairage (12) qui possède un dispositif lumineux (62), le dispositif émetteur (44, 46, 52, 56) étant disposé dans ou directement contre le dispositif lumineux (62) et émettant sans fil un signal radioélectrique (78, 48, 58) comprenant des données d'identification spécifiques pour le dispositif émetteur (44, 46, 52, 56),
le signal radioélectrique (78, 48, 58) étant émis conformément à précisément une norme radioélectrique prédéfinie, le signal radioélectrique (78, 48, 58) contenant les données d'identification spécifiques dans au moins deux formats de données différents l'un de l'autre,
**caractérisé en ce que**
le dispositif émetteur (44, 46, 52, 56) reçoit, au moyen d'une unité de réception, un signal de terminal d'un terminal de communication, détermine son format de données et émet le signal radioélectrique (78, 48, 58) comprenant les données d'identification spécifiques conformément au format de données déterminé.

2. Procédé selon la revendication 1, **caractérisé en ce que** le signal radioélectrique (78, 48, 58) est divisé dans le temps en un nombre donné de portions de signal successives, le nombre donné de portions de signal correspondant au moins à un nombre donné de formats de données différents les uns des autres, au moins l'une des portions de signal étant associée à chaque format de données.

3. Procédé selon la revendication 2, **caractérisé en ce qu'**une période pour l'une respective des portions de signal dépend du format de données respectivement associé.

4. Procédé selon la revendication 2 ou 3, **caractérisé en ce que** le format de données associé à chaque portion de signal est fourni par une unité de formatage du dispositif émetteur (44, 46, 52, 56) respectivement adaptée au format de données respectif.

5. Procédé selon l'une des revendications 2 à 4, **caractérisé en ce que** lorsqu'une fin chronologique de la période d'une première des portions de signal est atteinte, une fourniture des données d'identification spécifiques selon un deuxième format de données associé à une deuxième portion de signal est automatiquement déclenchée, ladite deuxième portion de signal suivant directement la première portion de signal.

6. Procédé selon l'une des revendications 2 à 5, **caractérisé en ce que** chaque portion de signal est émise par une unité radioélectrique (54) du dispositif émetteur (44, 46, 52, 56) propre, associée à la portion de signal respective.

7. Procédé selon la revendication 6, **caractérisé en ce qu'**une liaison de communication est établie au moins entre les unités radioélectriques (54) du dispositif émetteur (52).

8. Procédé selon la revendication 6 ou 7, **caractérisé en ce que** seule celle parmi les unités radioélectriques (54) qui est associée à une portion de signal respectivement active est alimentée en énergie électrique.

9. Procédé selon l'une des revendications 6 à 8, **caractérisé en ce qu'**au moins deux des portions de signal sont émises par une unique unité radioélectrique (54), lesdites portions de signal contenant les données d'identification spécifiques dans deux formats de données différents l'un de l'autre.

10. Procédé selon la revendication 9, **caractérisé en ce que** l'unité radioélectrique (54) est réglée en référence à un nombre des portions de signal à fournir et/ou aux formats de données associés aux portions de signal respectives.

11. Procédé selon l'une des revendications précédentes, **caractérisé en ce que** le signal radioélectrique est émis dans au moins une zone qui est éclairée au moyen du dispositif d'éclairage (12) qui comporte le dispositif émetteur (44, 46, 52, 56) dans un mode d'éclairage conforme à l'usage prévu.

12. Procédé selon l'une des revendications précédentes, **caractérisé en ce que** l'émission du signal radioélectrique (78, 48, 58) est répétée dans un intervalle de temps prédéfini.

13. Procédé selon l'une des revendications précédentes, **caractérisé en ce que** le format de données déterminé est comparé avec les formats de données et le format de données déterminé est associé à l'une des portions de signal.

14. Dispositif d'éclairage (12) comprenant un dispositif émetteur (44, 46, 52, 56) et dispositif lumineux (62), le dispositif émetteur (44, 46, 52, 56) étant disposé dans ou directement contre le dispositif lumineux (62) et étant configuré pour émettre sans fil un signal radioélectrique (78, 48, 58) comprenant des données d'identification spécifiques pour le dispositif émetteur (44, 46, 52, 56),
le dispositif émetteur (44, 46, 52, 56) étant en outre configuré pour émettre le signal radioélectrique (78, 48, 58) conformément à précisément une norme radioélectrique prédéfinie, le signal radioélectrique (78, 48, 58) contenant les données d'identification spécifiques dans au moins deux formats de données différents l'un de l'autre,
**caractérisé en ce que**
le dispositif émetteur (44, 46, 52, 56) reçoit, au moyen d'une unité de réception, un signal de terminal d'un terminal de communication, détermine son format de données et émet le signal radioélectrique (78, 48, 58) comprenant les données d'identification spécifiques conformément au format de données déterminé.
